# EUROPEAN PATENT SPECIFICATION

(11) **EP 3 056 091 B1**
(45) Date of publication and mention of the grant of the patent: **24.06.2020**
(21) Application number: 13895144.7
(22) Date of filing: 11.10.2013
(51) Int. Cl.: A23K 50/75, A23K 20/20, A23L 33/14, A23L 31/10

(54) **IODIZATION METHOD AND IODINE-CONTAINING PRODUCT FOR USE IN FEEDING ANIMALS AND BIRDS**
IODIERUNGSVERFAHREN UND IODHALTIGES PRODUKT ZUR FÜTTERUNG VON TIEREN UND VÖGELN
PROCÉDÉ D'IODISATION ET PRODUIT CONTENANT DE L'IODE UTILISÉ DANS L'ALIMENTATION D'ANIMAUX ET DE VOLATILES

(43) Date of publication of application: 17.08.2016
(73) Proprietor: Akcionernoe Obschestvo "Bioamid", g. Saratov 410033 (RU)
(72) Inventor: VORONIN, Sergey Petrovich, g. Saratov 410028 (RU); GUMENIUK, Anatoliy Petrovich, g. Saratov 410005 (RU); VORONIN, Dmitriy Sergeevich, g. Saratov 410028 (RU); BORTCOVA, Olga Pavlovna, g. Saratov 410044 (RU); ILIINA, Natalia Vasilievna, g. Saratov 410007 (RU); AVDEEV, Pavel Viacheslavovich, g. Saratov 410008 (RU)
(74) Representative: Chimini, Francesco
(86) International application number: PCT/RU2013/000903
(87) International publication number: WO 2015/053650

(56) References cited:
- CN-A- 101 361 566
- JP-A- S58 187 149
- RU-C1- 2 173 707
- US-A1- 2007 219 396
- BARBARA DOLINSKA ET AL: "Influence of Incubation Conditions on Hydrolysis Efficiency and Iodine Enrichment in Baker's Yeast", BIOLOGICAL TRACE ELEMENT RESEARCH, HUMANA PRESS INC, NEW YORK, vol. 147, no. 1 - 3, 2012, pages 354-358, XP035062539, ISSN: 1559-0720, DOI: 10.1007/S12011-011-9318-0
- Grace Langula ET AL: "PRODUCTION OF IODIZED SACCHAROMYCES CEREVISIAE EDIBLE YEAST USING BROWN SEAWEEDS SARGASSUM SP EXTRACT MEDIA BY SUBMERGED FERMENTATION", , 1 January 2012 (2012-01-01), pages 617-623, XP055377356, Retrieved from the Internet: URL:http://www.scienceandnature.org/IJABR_ Vol2(4)2012/IJABR_V2(4)10.pdf [retrieved on 2017-05-31]

## Description

This invention relates to the field of feed production, in particular to iodinated organic compounds available for common use in livestock and poultry feeding.

Iodine belongs to the most important minor-nutrient elements needed for normal grow and breeding of livestock. In case of iodine deficiency in the livestock diet growth retardation, significant delay in development of reproductive glands, skin and hair are observed. Early prenatal death and decomposition of fetus, abortion and stillbirth are observed. Addition of iodine in the form of inorganic compounds to livestock feed causes losses of iodine itself or oxidation of vitamins. As a rule, iodine bound with organic compounds is fully ingested by animal organism; it is storage-stable and causes no by-reactions with feed components. The list of iodine organic compounds is ever-growing. However, most of these compounds are not available for extensive use due to limited availability of original stock or complicated iodation process.

The following food products containing iodinated food additives are known: bread, bakery products, milk, butter, manufactured meats (for example, see Collected book of recipes and process instructions for cooking dietary and prophylactic kinds of bakery products, State scientific and research institute for baking industry. - M.: Pischeprodukt, 1997; Iodinating food additive "Amiton" (" 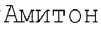 "), 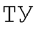 , 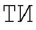 , 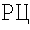 9110-273-05747158-98). Inorganic iodine compounds, laminaria (sea kale), and yeast cultivated in iodinated aqueous medium are used as food additives for the said products.

There is a biologically active additive to food (patent No. RU2328878) produced in the form of casein containing in its organic molecules both iodine and zinc for prevention of iodine deficiency disorders and optimization of iodine metabolism.

There is the iodinated vitamin and amino-acid concentrate "Drozhzhelizin" (" 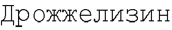 ") (patent No. RU2189154) produced by means of enzyme hydrolysis of protein molecules of yeast cells with double-contoured stirring
of iodinated yeast cream for 12-24 hours in rarefied medium or under standard conditions at 50-55 °C followed by separation of damaged cell membranes and drying the target product, at that the iodinated yeast cream is produced from pressed iodinated yeast, and iodine is present in the final product in the organically bound form as stable compounds with protein molecules.

Disadvantages of the above mentioned products are complexity of technology and high cost of production. Moreover, they are purposed for humans, and there are no data on efficiency of their use for livestock and poultry feeding.

There are the production technology and bioactive feed additive (patent No. RU 2212818) for prevention of iodine deficiency, which is containing organic iodinated compound and characterized in that this substance is a synthetic organic compound with covalent-bonded iodine selected from the group of carboxylic acids, unsaturated fatty acids, lipids, terpenes, alkanes, terpenoids, isoprenes, peptides, polypeptides, amino acids, protein hydrolysates, polypeptide hydrolysates, vegetable proteins, animal proteins, microbiological proteins, mixture of lipids and unsaturated fatty acids, mixture of isoprenes and terpenes, mixture of isoprenes and protein hydrolysates, mixture of isoprenes and unsaturated fatty acids, mixture of vegetable proteins, animal proteins and microbiological proteins, mixture of vegetable proteins and animal proteins, mixture of animal proteins and microbiological proteins, mixture of vegetable proteins and microbiological proteins. Herewith, in proteins, peptides, polypeptides, amino acids, polypeptide hydrolysates and protein hydrolysates iodine is covalently bound in the 5th and 3rd or in the 3rd position of the phenol cycle, while amino acids and proteins are selected from the group of amino acids and proteins without hormonal and thyroid activity and produced under conditions eliminating condensation of tyrosine cores.

Disadvantages of the above mentioned analogue are also complexity of technology and high cost of production. Moreover, there are no data on efficiency of use of this additive for livestock and poultry feeding.

The purpose of this invention is to facilitate the method of organic compound iodation and expand the list of iodinated organic compounds available for common use in livestock and poultry feeding for compensation of iodine demand.

This purpose is accomplished by the use of available and simple-to-operate initial substances (baker's yeast, potassium iodide and hydrogen peroxide as a specific oxidant) and that the iodation reaction is carried out in a heterogeneous medium without conversion of the object of iodation in the soluble state under "mild conditions" (temperature 40-60 °C, aqueous medium). Expansion of the list of iodinated organic compounds available for common use in livestock and poultry feeding is accomplished due to the new iodine-containing product - iodinated baker's yeast, which production is ensured by the available raw material base.

This invention proposes to use a generally available inexpensive and ecologically safe product - baker's yeast for production of the new iodine-containing product for livestock and poultry feeding. As above mentioned the known iodation methods are complicated and multistage methods requiring special production conditions and personnel qualification, so the proposed invention contains the simplest way of iodation of baker's yeast in practice.

Iodation, which results in production of iodinated baker's yeast with iodine content from 0.1 to 2.5 wt. %, is carried out as follows.

The weighed portion of yeast is diluted with water to obtain a stable heterogeneous system. The mixture is heated under constant stirring up to 40-60 °C, and the calculated amount of potassium iodide required for obtaining the specified percentage of iodine in yeast is added. After that, hydrogen peroxide in amount required for oxidation of the added iodine ions to elementary iodine is added. Iodation reaction finishes in 20-60 minutes. Disappearing of the initial yellow-brown color of the mixture and negative result of the qualitative reaction for iodine with starch and for iodine ions with starch and hydrogen peroxide evidence that the process finished.

Example No. 1 (for confirmation of specific effect of hydrogen peroxide).

The process described above is repeated with replacement of hydrogen peroxide by sodium nitrite (or another oxidant capable of oxidation of iodine ions). Persistent change to yellow-brown color of the mixture is observed. The qualitative reaction with starch evidences presence of iodine in the mixture. Iodation does not take place.

Example No. 2 (for demonstration of the use of iodized yeast for broiler growing).

Table 1. Comparative figures for broiler growing with replacement of potassium iodide as the inorganic source of iodine in the feed (1 g/t of combined feed) by iodized baker's yeast as the organic source of iodine in the feed (35 broilers in each test).
(Moscow, All-Russian Scientific and Research Institute of Poultry Breeding Technology)

| Values | Reference inorganic iodine | Test 1 organic iodine 60 mg/t | Test 2 organic iodine 90 mg/t | Test 3 organic iodine 120 mg/t | Test 4 organic iodine 150 mg/t |
|---|---|---|---|---|---|
| Live weight at the 7th day, g | 171 ± 3 | 170 ± 3 | 178 ± 3 | 174 ± 3 | 161 ± 2 |
| Live weight at the 18th day, g | 596 ± 11 | 608 ± 14 | 597 ± 19 | 602 ± 16 | 570 ± 17 |
| Live weight at the 35th day, g | 1805 ± 22 | 2005 ± 32 +11 % | 1901 ± 36 +5.3 % | 2007 ± 43 +7.1 % | 1977 ± 38 +9.5 % |
| Feed consumption per 1 kg of growth, kg | 1. 90 | 1.65 | 1.77 | 1.69 | 1. 68 |
| Average daily growth gain, g | 50.2 | 56.7 | 53.5 | 56.0 | 56.0 |
| Slaughter yield, % | 70.4 | 72.6 | 71.5 | 72.9 | 72.2 |

Example No. 3 for demonstration of the use of iodized yeast in feeding the weaned piglets.

Table 2. Comparative figures for piglets growing with replacement of potassium iodide as the inorganic source of iodine in the feed (1 g/t of combined feed) by iodized baker's yeast as the organic source of iodine in the feed (0.9 g/t of combined feed) (15 piglets in each nest, ADG - average daily gain).
Avgust-Agro company, the Saratov Region

| Nests | Average mass of piglet, kg 1st day | Average mass of piglet/ADG, kg 6th day | Average mass of piglet/ADG, kg 15th day | Average mass of piglet/ADG, kg 30th day | Total ADG of the test, kg |
|---|---|---|---|---|---|
| 24 | 8.20 | 8.97/0.15 | 11.59/0.29 | 17.29/0.38 | 0.313 |
| 25 reference | 6.49 | 6.85/0.07 | 8.51/0.18 | 13.00/0.30 | 0.224 |
| | | | | 29th day | |
| 22 | 8.43 | 9.86/0.29 | 12.66/0.31 | 17.69/0.36 | 0.331 |
| 23 test | 6.93 | 8.03/0.22 | 10.33/0.26 | 14.61/0.31 | 0.274 |
| % weight gain to reference | | | | Per one day +12.9 % | |

Thus, the test results prove high efficiency of the new iodine-containing product with simplification of the production technology.

## Claims

1. A method of iodation of baker's yeast for using in livestock and poultry feeding which includes the stage of iodation with elementary iodine in activate state, wherein iodation is carried out in aqueous media at a temperature of 40-60°C, with pH from 3.0 to 5.5, and under constant stirring by sequentially adding potassium iodide and treating with hydrogen peroxide as an oxidizing agent for 20 to 60 minutes.

2. Method according to claim 1 wherein iodation is carried out in a heterogeneous medium without conversion of baker's yeast to the soluble state.

3. Method according to claim 1, wherein the hydrogen peroxide used is with at least 3-time molar excess.

4. Method according to claim 1 wherein the ratio of weight fractions of aqueous media and baker's yeast is from 1:0.3 to 1:1.

5. An iodine-containing product which includes iodized baker's yeast obtained by the method according to any of the claims 1-4.

6. The iodine-containing product according to claim 5, which includes iodized baker's yeast with bound iodine content from 0.1 to 2.5 wt. %.

## Patentansprüche

1. Verfahren zur Jodierung von Bäckerhefe für die Verwendung in der Fütterung von Vieh und Geflügel umfassend die Phase einer Jodierung mit Elementarjod in aktiviertem Zustand, wobei die Jodierung in einem wässrigen Medium bei einer Temperatur von 40 bis 60°C mit einem pH-Wert von 3,0 bis 5,5 und unter konstantem Rühren durch sequentielle Zugabe von Kaliumjodid und dem Behandeln mit Wasserstoffperoxid als oxidierendes Mittel für 20 bis 60 Minuten durchgeführt wird.

2. Verfahren nach Anspruch 1, wobei die Jodierung in einem heterogenen Medium ohne Umwandlung der Bäckerhefe in einen löslichen Zustand erfolgt.

3. Verfahren nach Anspruch 1, wobei das Wasserstoffperoxid in einem mindestens 3-fachen molaren Überschuss verwendet wird.

4. Verfahren nach Anspruch 1, wobei das Verhältnis der Gewichtsanteile von wässrigem Medium und Bäckerhefe von 1 : 0,3 bis 1 : 1 liegt.

5. Jodhaltiges Erzeugnis, welches jodierte Bäckerhefe enthält, die durch ein Verfahren nach einem der Ansprüche 1 bis 4 erhalten wurde.

6. Jodhaltiges Erzeugnis nach Anspruch 5, welches jodierte Böckerhefe mit einem Gehalt an gebundenem Jod von 0,1 bis 2,5 Gew.-% enthält.

## Revendications

1. Procédé d'iodation de levure de boulanger pour une utilisation dans l'alimentation du bétail et des volailles qui comprend l'étape d'iodation avec de l'iode élémentaire dans un état activé, dans lequel l'iodation est réalisée en milieu aqueux à une température de 40 à 60 °C, avec un pH de 3,0 à 5,5, et sous agitation constante en ajoutant séquentiellement de l'iodure de potassium et en traitant avec du peroxyde d'hydrogène en tant qu'agent oxydant pendant 20 à 60 minutes.

2. Procédé selon la revendication 1, dans lequel l'iodation est réalisée dans un milieu hétérogène sans convertir la levure de boulanger à l'état soluble.

3. Procédé selon la revendication 1, dans lequel le peroxyde d'hydrogène utilisé l'est avec un excès molaire d'au moins 3 fois.

4. Procédé selon la revendication 1, dans lequel le rapport des fractions pondérales de milieu aqueux et de levure de boulanger est de 1 : 0,3 à 1 : 1.

5. Produit contenant de l'iode qui comprend de la levure de boulanger iodée obtenue par le procédé selon l'une quelconque des revendications 1 à 4.

6. Produit contenant de l'iode selon la revendication 5, qui comprend de la levure de boulanger iodée ayant une teneur en iode lié de 0,1 à 2,5 % en poids.
